(19) Europäisches Patentamt
European Patent Office
Office européen des brevets

(11) **EP 4 220 822 A1**

(12) **EUROPEAN PATENT APPLICATION**
published in accordance with Art. 153(4) EPC

(43) Date of publication:
**02.08.2023 Bulletin 2023/31**

(51) International Patent Classification (IPC):
***H01M 50/10*** *(2021.01)*

(21) Application number: **20955135.7**

(52) Cooperative Patent Classification (CPC):
**H01M 50/10; Y02E 60/10**

(22) Date of filing: **23.09.2020**

(86) International application number:
**PCT/JP2020/035663**

(87) International publication number:
**WO 2022/064541 (31.03.2022 Gazette 2022/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Hitachi Zosen Corporation**
**Osaka-shi, Osaka 559-8559 (JP)**
• **OHKITA SEISAKUSYO**
**Takatsuki-shi, Osaka 569-1121 (JP)**

(72) Inventors:
• **OKAMOTO Kenji**
**Osaka-shi, Osaka 559-8559 (JP)**

• **NISHIMURA Tsuyoshi**
**Osaka-shi, Osaka 559-8559 (JP)**
• **FUKUI Hideyuki**
**Osaka-shi, Osaka 559-8559 (JP)**
• **OHKITA Yoshifumi**
**Mishima-gun, Osaka 618-0013 (JP)**
• **OHKITA Kouji**
**Takatsuki-shi, Osaka 569-1121 (JP)**

(74) Representative: **Grünecker Patent- und Rechtsanwälte PartG mbB Leopoldstraße 4 80802 München (DE)**

(54) **SECONDARY BATTERY AND METHOD FOR MANUFACTURING SAME**

(57)     The present invention includes an outer package (2) and contents (3, 4) accommodated in the outer package (2). The contents (3, 4) include an electrode body (4). The outer package (2) substantially uniformly applies pressing force to each of the front surface and the rear surface of the contents (3, 4) due to the elastic force of the outer package (2).

F I G.  1

EP 4 220 822 A1

## Description

Technical Field

The present invention relates to a secondary battery and a method for manufacturing the same.

Background Art

Typically, a secondary battery includes an electrode body. In the electrode body, an intermediate layer is arranged between a positive electrode layer and a negative electrode layer, and a positive electrode current collector and a negative electrode current collector are respectively arranged on the outer surfaces of the positive electrode layer and the negative electrode layer.

Generally, the electrode body is not used as it is, but is accommodated in an outer package such as a casing, and used as a secondary battery.

Among conventional secondary batteries, a non-aqueous electrolyte secondary battery is disclosed in Japanese Patent Laid-Open No. 9-120836 (hereinafter, Patent Literature 1), for example. In this non-aqueous electrolyte secondary battery, an electrode body 2 is covered by a pushing guide plate 3, and inserted in an outer package can 1 (outer package). According to this configuration, the electrode body 2 is pressed by the guide plate 3 at a constant pressure, whereby battery characteristics of the secondary battery are maintained.

Summary of Invention

Technical Problem

In the non-aqueous electrolyte secondary battery described in Patent Literature 1, an opening from which the electrode body 2 is inserted is formed in the outer package can 1, and further the guide plate 3 has a shape opening toward the opening. Therefore, the pressing force applied to the electrode body 2 is different between the opening side and a side plate connection side, and hence the pressing force from the guide plate 3 is not uniform. Accordingly, in the electrode body, the contact resistance between the positive and negative electrode current collectors and the positive and negative electrode layers does not sufficiently decrease, unfortunately. Particularly, in the case where this non-aqueous electrolyte secondary battery is used in a vacuum atmosphere, the electrode body is not subjected to atmospheric pressure, and hence such a problem is more serious. Such a problem is not limited to the aforementioned non-aqueous electrolyte secondary battery, and also occurs in other types of secondary batteries. If the contact resistance in the electrode body does not sufficiently decrease in the secondary battery, this leads to a decrease in battery performance. In order to obtain sufficient battery performance in the secondary battery in this case, it is necessary to increase the size of the secondary battery.

Under the circumstance, the present invention has an object to provide a secondary battery and a method for manufacturing the same that can achieve downsizing and can improve battery performance.

Solution to Problem

In order to solve the aforementioned problem, provided is a secondary battery according to a first aspect of the present invention including an outer package and a content accommodated in the outer package, in which the content includes an electrode body, and the outer package substantially uniformly applies pressing force to each of the front surface and the rear surface of the content due to the elastic force of the outer package.

Furthermore, in a secondary battery according to a second aspect of the present invention, the content of the secondary battery according to the first aspect includes a laminated pack inside of which the electrode body is hermetically accommodated.

Furthermore, in a secondary battery according to a third aspect of the present invention, the inside of the outer package of the secondary battery according to the second aspect is under a negative pressure, and, inside the outer package, the inside of the laminated pack is under a lower pressure than the outside of the laminated pack.

Furthermore, in a secondary battery according to a fourth aspect of the present invention, the electrode body of the secondary battery according to any of the first to third aspects is formed of powder material.

Furthermore, a method for manufacturing a secondary battery according to a fifth aspect of the present invention is a method for manufacturing the secondary battery according to any one of the first to third aspects, the method including accommodating a content in an outer package, in which the outer package includes a front plate and a rear plate that press and sandwich the accommodated content from the front surface and the rear surface of the accommodated content, and in the state where the content is not accommodated in the outer package, the front plate and the rear plate of the outer package are connected to each other at respective end parts of the front plate and the rear plate by side plates, at least one of the front plate and the rear plate curves toward the inside of the outer package, and the front plate and the rear plate become closer to each other in central parts of the front plate and the rear plate than in the end parts.

Furthermore, in a method for manufacturing a secondary battery according to a sixth aspect of the present invention, in the state where the content is not accommodated in the outer package, one of the front plate and the rear plate of the outer package in the method for manufacturing the secondary battery according to the fifth aspect are parallel to each other in the end parts.

Advantageous Effects of Invention

According to the secondary battery and the method for manufacturing the same, because the pressing force is substantially uniformly applied to each of the front surface and the rear surface of the electrode body, the contact resistance inside the electrode body is decreased, and consequently the battery performance can be improved. Moreover, because the elastic force of the outer package is utilized to substantially uniformly apply the pressing force to each of the front surface and the rear surface of the electrode body, a separate configuration for this pressing force is not necessary, and consequently downsizing can be achieved.

Brief Description of Drawings

[FIG. 1] FIG. 1 is a schematic configuration diagram of a secondary battery according to an embodiment of the present invention.
[FIG. 2] FIG. 2 is an enlarged schematic configuration diagram of a part of the secondary battery.
[FIG. 3] FIG. 3 is a schematic configuration diagram for describing a method for manufacturing the secondary battery, and illustrates an outer package and contents before the contents are accommodated in the outer package.
[FIG. 4] FIG. 4 is a schematic configuration diagram for describing the method for manufacturing the secondary battery, and illustrates an outer package having another shape before the contents are accommodated in the outer package.
[FIG. 5] FIG. 5 is a schematic configuration diagram of a secondary battery according to an example of the present invention.
[FIG. 6] FIG. 6 is a schematic configuration diagram of an apparatus that performs suctioning inside a laminated pack, as an apparatus for manufacturing the secondary battery.

Description of Embodiments

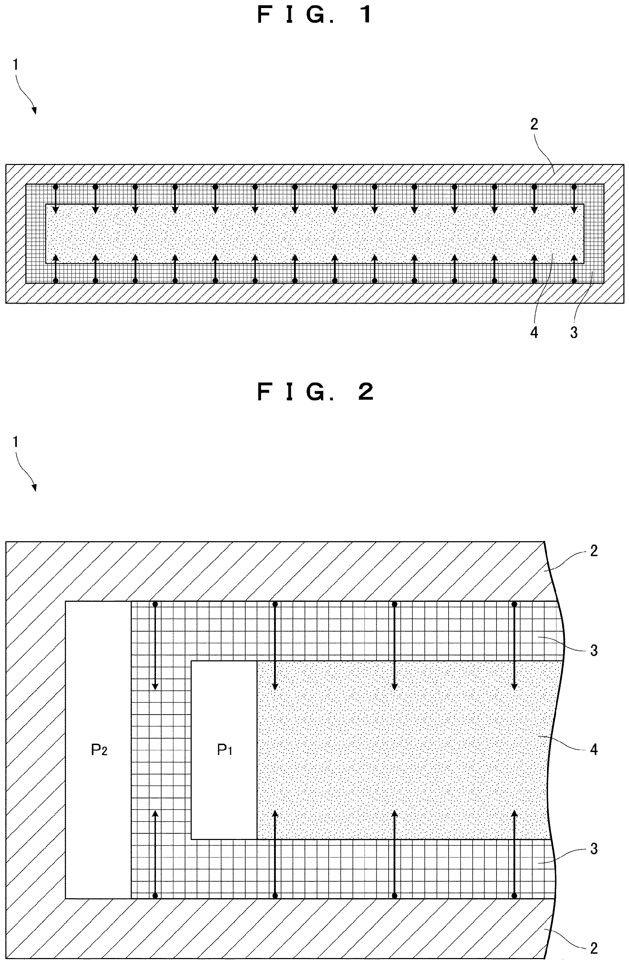

Hereinafter, a secondary battery and a method for manufacturing the same according to an embodiment of the present invention are described with reference to the drawings.
Firstly, the secondary battery is described with reference to FIG. 1 and FIG. 2.
As illustrated in FIG. 1, this secondary battery 1 includes an outer package 2 formed from an elastic member and contents 3, 4 accommodated in the outer package 2. The contents 3, 4 include an electrode body 4. The outer package 2 substantially uniformly applies pressing force to each of the front surfaces and the rear surfaces of the contents 3, 4 due to the elastic force of the outer package 2. The term "substantially uniformly" here is not limited to complete uniformity, and also includes that the pressing force is uniform enough to prevent the contact resistance inside the electrode body 4 from increasing.
The material of the outer package 2 is not particularly limited as long as the pressing force is applied to the contents 3, 4 inside the outer package 2 due to the elastic force thereof. The material of the outer package 2 is, for example, a rigid member such as resin and metal. The electrode body 4 is not particularly limited as long as the battery performance is improved by substantially uniformly applying the pressing force to each of the front surface and the rear surface of the electrode body 4. The electrode body 4 is, for example, on one of a liquid-based electrode body in which an electrolytic solution is used between a positive electrode layer and a negative electrode layer and a solid-based electrode body in which a solid electrolyte is used between the positive electrode layer and the negative electrode layer.
In this way, according to the secondary battery 1, because the pressing force is substantially uniformly applied to each of the front surface and the rear surface of the electrode body 4, the contact resistance inside the electrode body 4 is decreased, and consequently the battery performance can be improved.
Moreover, because the elastic force of the outer package 2 is utilized to substantially uniformly apply the pressing force to each of the front surface and the rear surface of the electrode body 4, a separate configuration for this pressing force is not necessary, and consequently downsizing can be achieved.
Here, a preferable configuration of the secondary battery 1 is described.
As illustrated in FIG. 1 and FIG. 2, it is preferable that the contents 3, 4 include a laminated pack 3 inside of which the electrode body 4 is hermetically accommodated. Accordingly, because the electrode body 4 is protected by the laminated pack 3, the battery performance can be further improved.
Moreover, it is preferable that the inside of the outer package 2 is under a negative pressure and that, inside the outer package 2, the inside of the laminated pack 3 is under a lower pressure than the outside thereof. That is, as illustrated in FIG. 2, it is preferable that, inside the outer package 2, a pressure P1 inside the laminated pack 3 is lower than a pressure P2 outside the laminated pack 3 (P1 < P2). Accordingly, because the electrode body 4 is pressed due to not only the elastic force but also the difference between the respective pressures P1 and P2 of the inside and outside of the laminated pack 3, the contact resistance inside the electrode body 4 is further decreased, and consequently the battery performance can be further improved.
Particularly, it is preferable that both the pressures P1 and P2 are low to the point of a vacuum. In this case, it can be said that the degree of vacuum inside the laminated pack 3 is higher than the degree of vacuum outside the laminated pack 3. Accordingly, even in the case where the outside of the outer package 2 is a vacuum, because the electrode body 4 is still pressed due to the difference between the respective degrees of vacuum of the inside and outside of the laminated pack 3, the contact resistance inside the electrode body 4 is further decreased, and consequently the battery performance can be further improved.

Furthermore, it is preferable that the electrode body 4 is formed of powder material. In the case where the electrode body 4 is formed of the powder material, the secondary battery 1 can also be referred to as an all-solid-state secondary battery. If the powder material is pressed, the contact resistance is significantly decreased, and expansion and contraction at the time of charge and discharge are suppressed. Accordingly, if the electrode body 4 is formed of the powder material, the battery performance can be further improved.

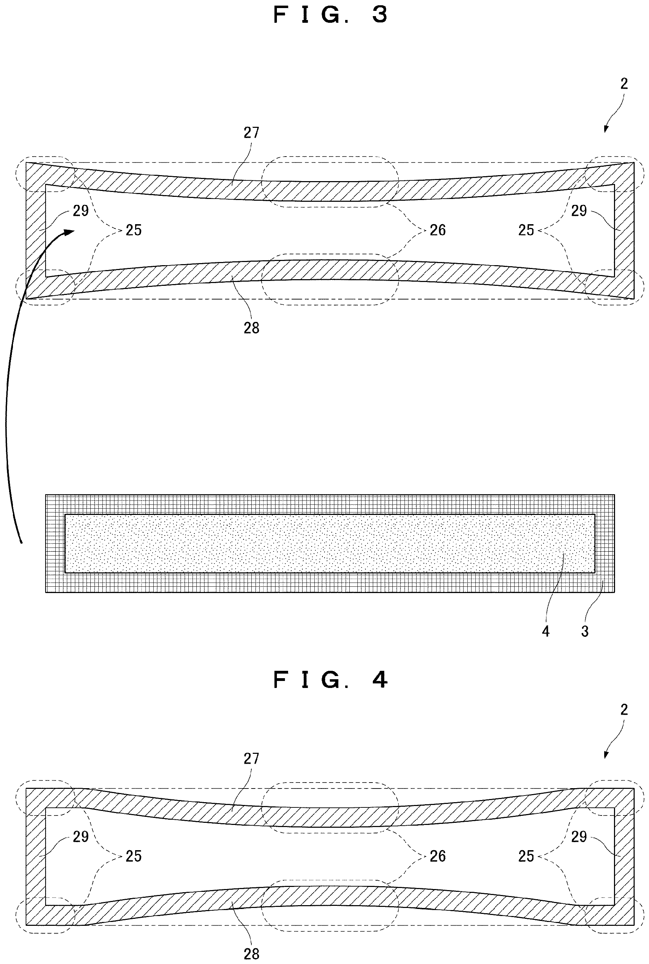

Next, the method for manufacturing the secondary battery 1 is described with reference to FIG. 3 and FIG. 4.

As illustrated in FIG. 3, this manufacturing method includes an accommodation step of accommodating the contents 3, 4 in the outer package 2. As illustrated in FIG. 1, the contents 3, 4 that have been accommodated as a result of this accommodation step are pressed and sandwiched by a front plate 27 and a rear plate 28 of the outer package 2. In the state where the contents 3, 4 are not accommodated in the outer package 2, as illustrated in FIG. 3, the front plate 27 and the rear plate 28 of the outer package 2 are connected to each other at respective end parts 25 of the front plate 27 and the rear plate 28 by side plates 29, curve toward the inside of the outer package 2, and become closer to each other in central parts 26 of the front plate 27 and the rear plate 28 than in the end parts 25. The central parts 26 here refer to respective intermediate portions of the front plate 27 and the rear plate 28 between the two side plates 29 that connect the front plate 27 and the rear plate 28 and the vicinities of the intermediate portions, as illustrated in FIG. 3. In the accommodation step described with reference to FIG. 3, the contents 3, 4 are accommodated in the outer package 2 including the front plate 27, the rear plate 28, and the side plates 29. Alternatively, the contents 3, 4 may be accommodated (sandwiched) between the front plate 27 and the rear plate 28, and then the respective end parts 25 of the front plate 27 and the rear plate 28 may be connected to each other by the side plates 29.

If the front plate 27 and the rear plate 28 of the outer package 2 are parallel to each other over the entire surfaces, the pressing force that is applied to the contents 3, 4 inside the outer package 2 due to the elastic force is small in the central parts 26 farther from the side plates 29, and is large in the end parts 25 closer to the side plates 29. However, if the outer package 2 has the aforementioned shape as illustrated in FIG. 3, because the contents 3, 4 are sufficiently pressed in the central parts 26 due to the elastic force, the pressing force is substantially uniformly applied all across the central parts 26 and the end parts 25 on each of the front surfaces and the rear surfaces of the contents 3, 4.

The shape of the outer package 2 is not limited to the shape illustrated in FIG. 3, and may be any shape as long as the pressing force is substantially uniformly applied to each of the front surfaces and the rear surfaces of the accommodated contents 3, 4. For example, the curve of the outer package 2 (specifically, the front plate 27 and the rear plate 28) is set to such an extent that the pressing force is substantially uniformly applied to each of the front surfaces and the rear surfaces of the accommodated contents 3, 4. Moreover, the curvature of the curve is also set to such an extent that the pressing force is substantially uniformly applied to each of the front surfaces and the rear surfaces of the contents 3, 4 accommodated in the outer package 2. That is, compared with the case where the front plate 27 and the rear plate 28 are parallel to each other over the entire surfaces, the curvature becomes smaller toward the central parts 26 in which larger pressing force is necessary, and becomes larger toward the end parts 25 in which smaller pressing force is necessary.

In this way, according to the method for manufacturing the secondary battery 1, because the pressing force is substantially uniformly applied to each of the front surface and the rear surface of the electrode body 4, the contact resistance inside the electrode body 4 is decreased, and consequently the battery performance can be improved.

Moreover, because the elastic force of the outer package 2 is utilized to substantially uniformly apply the pressing force to each of the front surface and the rear surface of the electrode body 4, a separate configuration for this pressing force is not necessary, and consequently downsizing can be achieved.

Here, a preferable configuration of the method for manufacturing the secondary battery 1 is described.

It is preferable that, before the contents 3, 4 are accommodated in the outer package 2, the front plate 27 and the rear plate 28 of the outer package 2 are parallel to each other in the end parts 25 as illustrated in FIG. 4. According to this configuration, the pressing force becomes small in the end parts 25 in which the pressing force tends to become large. Accordingly, because the pressing force is more uniformly applied to each of the front surface and the rear surface of the electrode body 4, the contact resistance inside the electrode body 4 is decreased, and consequently the battery performance can be further improved.

Furthermore, although not illustrated, it is preferable that, before the contents 3, 4 are accommodated in the outer package 2, the front plate 27 and the rear plate 28 of the outer package 2 extend along a quartic function curve. According to this configuration, the pressing force becomes small in the end parts 25 in which the pressing force tends to become large. Accordingly, because the pressing force is more uniformly applied to each of the front surface and the rear surface of the electrode body 4, the contact resistance inside the electrode body 4 is decreased, and consequently the battery performance can be further improved.

As a matter of course, the outer package 2 is not limited to the aforementioned configuration in which both the front plate 27 and the rear plate 28 curve as illustrated in FIG. 3 and FIG. 4. For example, as long as the pressing force is substantially uniformly applied to each of the front surfaces and the rear surfaces of the contents 3, 4 accommodated in the outer package 2, only any one of the front plate 27 and the rear plate 28 may curve.

Example

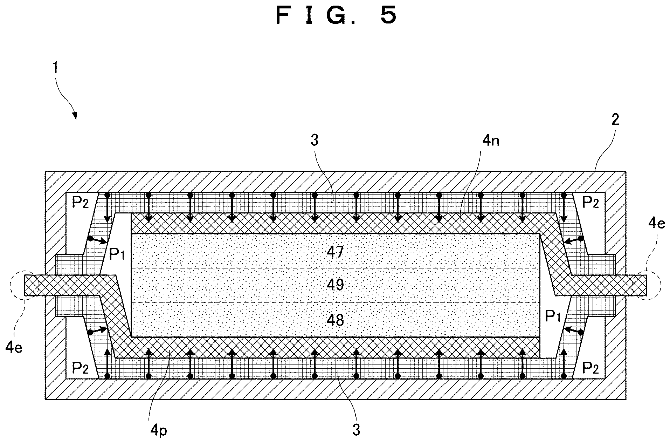

Hereinafter, a secondary battery 1 according to an example for more specifically describing the aforementioned embodiment is described with reference to FIG. 5. In the present example, description is given focusing on configurations omitted in the aforementioned embodiment, the same configurations as those in the aforementioned embodiment are denoted by the same reference signs, and description thereof is omitted.

As illustrated in FIG. 5, contents 3, 4 of the secondary battery 1 according to the present example, that is, what are accommodated in an outer package 2 include an electrode body 4 and a laminated pack 3 inside of which the electrode body 4 is hermetically accommodated. The electrode body 4 includes powder laminates 47 to 49 formed by laminating layers of powder material and current collectors 4p, 4n that sandwich the powder laminates 47 to 49 from the front surfaces and the rear surfaces of the powder laminates 47 to 49. The powder laminates 47 to 49 include a positive electrode layer 48, a negative electrode layer 47, and a solid electrolyte layer 49 sandwiched between the positive electrode layer 48 and the negative electrode layer 47. The current collectors 4p, 4n include a positive electrode current collector 4p that is in contact with the positive electrode layer 48 and a negative electrode current collector 4n that is in contact with the negative electrode layer 47. The positive electrode current collector 4p and the negative electrode current collector 4n are not completely accommodated in the laminated pack 3 and the outer package 2, and exposed parts 4e for extracting electric power from the powder laminates 47 to 49 reach the outside of the laminated pack 3 and the outer package 2.

The outer package 2 substantially uniformly applies pressing force to each of the front surfaces and the rear surfaces of the contents 3, 4 due to the elastic force of the outer package 2. Moreover, both the pressure P1 inside the laminated pack 3 and the pressure P2 inside the outer package 2 and outside the laminated pack 3 are low to the point of a vacuum, and the relation P1 < P2 is maintained.

More specifically, assuming that the pressure under a vacuum environment under which the secondary battery 1 according to the present example is used is P', the volume of the outer package 2 in an initial state is V, and the volume of the outer package 2 at the pressure P' is V', selection of the outer package 2 and setting of the pressures P1 and P2 are performed such that following expression (1) is satisfied.

$$V'/V < P2/P1 \quad ... \quad (1)$$

In the case where the secondary battery 1 is used under an atmospheric pressure environment, it is preferable that the pressure P2 is also an atmospheric pressure because the electrode body 4 is sufficiently pressed due to the difference between the respective degrees of vacuum of the inside and outside of the laminated pack 3. On the other hand, in the case where the secondary battery 1 is used at the pressure P' under a vacuum environment, it is preferable that the pressure P2 is equal to or less than 1,000 Pa because the electrode body 4 is sufficiently pressed due to the difference between the respective degrees of vacuum of the inside and outside of the laminated pack 3. In any of these cases, it is preferable that the pressure P1 is smaller than P2 and is equal to or less than 1 Pa (more preferably, equal to or less than $10^{-2}$ Pa) because the electrode body 4 is sufficiently pressed due to the difference between the respective degrees of vacuum of the inside and outside of the laminated pack 3.

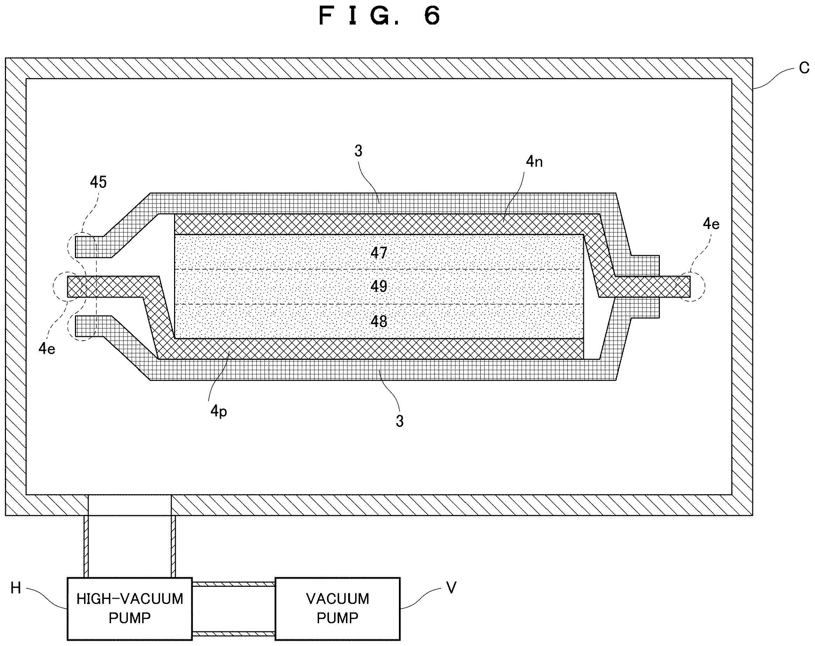

Hereinafter, a method for manufacturing the secondary battery 1 is described with reference to FIG. 6.

Firstly, the positive electrode layer 48, the solid electrolyte layer 49, and the negative electrode layer 47 are formed in the stated order on the positive electrode current collector 4p, and the negative electrode current collector 4n is arranged on the negative electrode layer 47, whereby the electrode body 4 is formed. Alternatively, the negative electrode layer 47, the solid electrolyte layer 49, and the positive electrode layer 48 are formed in the stated order on the negative electrode current collector 4n, and the positive electrode current collector 4p is arranged on the positive electrode layer 48, whereby the electrode body 4 is formed. Note that, in the case of using an insulating member (resin material) for one of the constituent members of the electrode body 4, it is preferable to adopt engineering plastic for the insulating member.

It is desirable that the electrode body 4 is processed such that at least one of (1) the water content value is equal to or less than 500 ppm, (2) the water absorption rate is equal to or less than 0.1%, and (3) the outgassing is equal to or less than 10 $\mu$g/cm$^2$ is satisfied. Moreover, it is preferable that the electrode body 4 is dried at a temperature that is equal to or more than that of a used atmosphere.

Then, this electrode body 4 is put inside the laminated pack 3. As illustrated in FIG. 6, in the state where one end part 45 of this laminated pack 3 is not sealed, the laminated pack 3 is arranged inside a vacuum chamber C. After that, the inside of the vacuum chamber C is brought into a vacuum by suction using a high-vacuum pump H and a vacuum pump V that are connected in series to the vacuum chamber C. When the inside of the laminated pack 3 reaches the predetermined pressure P1, the one end part 45 of the laminated pack 3 is sealed, whereby the contents 3, 4 are formed. Note that a turbomolecular pump, an oil-diffusion pump, and the like are adopted as the high-vacuum pump H.

Next, the outer package 2 for accommodating the contents 3, 4 is prepared. This outer package 2 has such a shape that can substantially uniformly apply the pressing force to each of the front surfaces and the rear surfaces of the accommodated contents 3, 4, as illustrated in one of FIG. 3 and FIG. 4. Then, as an accommodation step, the contents 3, 4 are accommodated in the outer package 2. After that, although not illustrated, the inside of the outer package 2 is brought into the predetermined pressure P2 using another vacuum pump or the like, whereby the secondary battery 1 illustrated in FIG. 5 is manufactured.

In this way, according to the secondary battery 1 and the method for manufacturing the same according to the present example, because the pressing force is substantially uniformly applied to each of the front surface and the rear surface of the electrode body 4, the contact resistance inside the electrode body 4 is decreased, and consequently the battery performance can be further improved.

Moreover, because the elastic force of the outer package 2 is utilized to substantially uniformly apply the pressing force to each of the front surface and the rear surface of the electrode body 4, a separate configuration for this pressing force is not necessary, and consequently downsizing can be achieved.

In FIG. 2 and FIG. 5 for describing the embodiment and example, spaces for describing the pressures P1 and P2 are illustrated. However, these are mere illustrations for easier understanding, and do not mean that such spaces are essential.

Moreover, in FIG. 5 and FIG. 6 for describing the example, the powder laminates 47 to 49 are illustrated as the structure in which the number of laminated layers in each of the positive electrode layer 48, the solid electrolyte layer 49, and the negative electrode layer 47 is one, but may be more than one. Moreover, in FIG. 5 and FIG. 6, the number of units of the powder laminates 47 to 49 included in the electrode body 4 is illustrated as one unit, but may be more than one unit.

Furthermore, in the aforementioned example, as illustrated in FIG. 6, the high-vacuum pump H and the vacuum pump V that are connected in series to the vacuum chamber C are described as the apparatus that performs suctioning inside the laminated pack 3 of the secondary battery 1, but any apparatus may be adopted as long as the inside of the laminated pack 3 can be brought into a vacuum.

In addition, the aforementioned embodiment and example are given as mere exemplification in every respect, and the present invention is not limited thereto. The scope of the present invention is defined by not the aforementioned description but Claims, and intends to include meaning equivalent to Claims and all changes within Claims. Among the configurations described in the aforementioned embodiment and example, the configurations other than the configuration that is described as the first aspect of the present invention in "Solution to Problem" are optional configurations, and can be deleted and changed as appropriate.

## Claims

1. A secondary battery comprising:

   an outer package; and
   a content accommodated in the outer package, wherein
   the content includes an electrode body, and
   the outer package substantially uniformly applies pressing force to each of a front surface and a rear surface of the content due to elastic force of the outer package.

2. The secondary battery according to claim 1, wherein the content includes a laminated pack inside of which the electrode body is hermetically accommodated.

3. The secondary battery according to claim 2, wherein

   an inside of the outer package is under a negative pressure, and
   inside the outer package, an inside of the laminated pack is under a lower pressure than an outside of the laminated pack.

4. The secondary battery according to any one of claim 1 to claim 3, wherein the electrode body is formed of powder material.

5. A method for manufacturing the secondary battery according to any one of claim 1 to claim 3, the method comprising accommodating the content in the outer package, wherein

   the outer package includes a front plate and a rear plate that press and sandwich the accommodated content from the front surface and the rear surface of the accommodated content, and in a state where the content is not accommodated in the outer package,
   the front plate and the rear plate of the outer package are connected to each other at respective end parts of the front plate and the rear plate by side plates,
   at least one of the front plate and the rear plate curves toward an inside of the outer package, and

the front plate and the rear plate become closer to each other in central parts of the front plate and the rear plate than in the end parts.

6. The method for manufacturing the secondary battery according to claim 5, wherein, in the state where the content is not accommodated in the outer package, one of the front plate and the rear plate of the outer package are parallel to each other in the end parts.

# F I G. 1

# F I G. 2

# FIG. 3

# FIG. 4

# F I G. 5

# F I G. 6

EP 4 220 822 A1

## INTERNATIONAL SEARCH REPORT

| | International application No. |
|---|---|
| | PCT/JP2020/035663 |

A. CLASSIFICATION OF SUBJECT MATTER
Int. Cl. H01M50/10(2021.01)i
FI: H01M2/02 K

According to International Patent Classification (IPC) or to both national classification and IPC

B. FIELDS SEARCHED

Minimum documentation searched (classification system followed by classification symbols)
Int. Cl. H01M2/02

Documentation searched other than minimum documentation to the extent that such documents are included in the fields searched
Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 3071990 U (BIONICS CO., LTD.) 12 July 2000 (2000-07-12), claim 1, paragraphs [0001], [0003], [0006] | 1-2, 4 |
| Y | | 3-4 |
| X | JP 2005-197179 A (TOYOTA MOTOR CORP.) 21 July 2005 (2005-07-21), claims 1-5, paragraph [0002] | 1-2, 4-5 |
| X | JP 2018-49708 A (GS YUASA INTERNATIONAL LTD.) 29 March 2018 (2018-03-29), claim 1, paragraphs [0002], [0012], fig. 1 | 1, 4-6 |
| Y | JP 2014-103055 A (NISSAN MOTOR CO., LTD.) 05 June 2014 (2014-06-05), paragraph [0010] | 3-4 |

☒ Further documents are listed in the continuation of Box C.          ☒ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 06.10.2020 | 27.10.2020 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

| International application No. |
|---|
| PCT/JP2020/035663 |

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2013-73913 A (AUTOMOTIVE ENERGY SUPPLY CORP.) 22 April 2013 (2013-04-22) | 1-6 |
| A | WO 2010/089813 A1 (PANASONIC CORP.) 12 August 2010 (2010-08-12) | 1-6 |
| A | WO 2017/002235 A1 (NISSAN MOTOR CO., LTD.) 05 January 2017 (2017-01-05) | 1-6 |

Form PCT/ISA/210 (continuation of second sheet) (January 2015)

**INTERNATIONAL SEARCH REPORT**
Information on patent family members

International application No.

PCT/JP2020/035663

| Patent Documents referred to in the Report | Publication Date | Patent Family | Publication Date |
|---|---|---|---|
| JP 3071990 U | 12.07.2000 | (Family: none) | |
| JP 2005-197179 A | 21.07.2005 | (Family: none) | |
| JP 2018-49708 A | 29.03.2018 | (Family: none) | |
| JP 2014-103055 A | 05.06.2014 | (Family: none) | |
| JP 2013-73913 A | 22.04.2013 | US 2014/0205887 A1<br>WO 2013/047778 A1<br>EP 2747167 A1 | |
| WO 2010/089813 A1 | 12.08.2010 | US 2011/0135997 A1<br>EP 2395587 A1<br>CN 102265445 A<br>KR 10-2011-0049864 A | |
| WO 2017/002235 A1 | 05.01.2017 | US 2018/0166663 A1<br>EP 3319142 A1<br>CN 107735881 A<br>KR 10-2018-0011850 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9120836 A